# EUROPÄISCHE PATENTSCHRIFT

(11) **EP 3 392 097 B1**
(45) Veröffentlichungstag und Bekanntmachung des Hinweises auf die Patenterteilung: **10.06.2020**
(21) Anmeldenummer: 18166719.7
(22) Anmeldetag: 11.04.2018
(51) Int. Cl.: B60S 1/34, B60S 1/52

(54) **WISCHERVORRICHTUNG**
WIPER DEVICE
DISPOSITIF ESSUIE-GLACES

(30) Priorität: 21.04.2017 DE 102017206758
(43) Veröffentlichungstag der Anmeldung: 24.10.2018
(73) Patentinhaber: Robert Bosch GmbH, 70442 Stuttgart (DE)
(72) Erfinder: Kraemer, Godelieve, 76549 Huegelsheim (DE)

(56) Entgegenhaltungen:
- DE-A1-102014 017 602
- DE-U1- 8 708 171
- US-A- 4 782 547
- US-A- 5 894 626

## Beschreibung

### Stand der Technik

Es ist bereits eine Wischervorrichtung vorgeschlagen worden mit einem an einem Wischarm geführten Schlauch, welcher dazu vorgesehen ist, ein Scheibenwaschwasser zu leiten.

In der US 4 782 547 A ist eine gattungsgemäße Wischervorrichtung gezeigt.

### Offenbarung der Erfindung

Die Erfindung geht aus von einer Wischervorrichtung, insbesondere Scheibenwischervorrichtung, mit einer Fluidleiteinheit, insbesondere Reinigungsfluidleiteinheit, die zumindest ein Befestigungselement aufweist, das zur Befestigung an einem Wischarm vorgesehen ist, und mit zumindest einem Kanalelement, das einstückig mit dem Befestigungselement ausgebildet ist. Es wird vorgeschlagen, dass das Befestigungselement und das Kanalelement zumindest teilweise, insbesondere zu wenigstens einem Großteil und vorteilhaft vollständig, aus verschiedenen Materialien gebildet sind. Dadurch kann vorteilhaft eine Materialeffizienz und/oder eine Materialhaltbarkeit verbessert werden. Darunter, dass zwei Elemente "zumindest teilweise aus verschiedenen Materialien" gebildet sind, soll insbesondere verstanden werden, dass wenigstens ein erster Teil eines ersten Elements der Elemente aus einem anderen Material gebildet ist als wenigstens ein zweiter Teil eines zweiten Elements der Elemente. Darunter, dass zwei Elemente "zu wenigstens einem Großteil aus verschiedenen Materialien" gebildet sind, soll insbesondere verstanden werden, dass ein erster Großteil eines ersten Elements der Elemente aus einem anderen Material gebildet ist als ein zweiter Großteil eines zweiten Elements der Elemente. Unter einem "Großteil" eines Objektes soll insbesondere ein Teil des Objektes verstanden werden, welcher mehr als 50 %, vorteilhaft mehr als 70 %, besonders vorteilhaft mehr als 85 %, vorzugsweise mehr als 95 % und besonders bevorzugt mehr als 99 % eines von dem Objekt eingenommenen Volumens einnimmt.

Unter einer "Wischervorrichtung" soll insbesondere zumindest ein Teil, insbesondere eine Unterbaugruppe, eines Wischers, insbesondere eines Scheibenwischers, vorteilhaft eines Fahrzeugscheibenwischers und besonders vorteilhaft eines Kraftfahrzeugscheibenwischers, verstanden werden. Insbesondere kann der Wischer und vorteilhaft die Wischervorrichtung zusätzlich zumindest einen Wischarm, zumindest ein Wischblatt, zumindest einen Wischarmadapter und/oder zumindest einen Wischblattadapter umfassen. Vorteilhaft ist das Wischblatt mit dem Wischarm koppelbar, insbesondere mittels des Wischarmadapters und/oder mittels des Wischblattadapters. Unter einem "Wischarmadapter" soll insbesondere ein Adapter verstanden werden, der einen Kontaktbereich zu einem Wischarmbauteil des Wischarms aufweist und vorzugsweise mit dem Wischarmbauteil unverlierbar verbunden ist und insbesondere dazu vorgesehen ist, einen Kopplungsbereich des Wischarmbauteils für eine Kopplung und/oder Kontaktierung mit einem Wischblattadapter bereitzustellen. Vorteilhaft ist der Wischarmadapter einstückig ausgebildet. Unter "einstückig" soll insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren, insbesondere einem Ein- und/oder Mehrkomponenten-Extrusionsverfahren, und/oder einem Spritzgussverfahren, insbesondere einem Ein- und/oder Mehrkomponenten-Spritzgussverfahren, hergestellt. Ferner soll unter einem "Wischblattadapter" insbesondere ein Adapter verstanden werden, der einen Kontaktbereich zu einem Wischblattbauteil des Wischblatts aufweist und vorzugsweise mit dem Wischblattbauteil unverlierbar verbunden ist und insbesondere dazu vorgesehen ist, einen Kopplungsbereich des Wischblattbauteils für eine Kopplung und/oder Kontaktierung mit einem Wischarmadapter bereitzustellen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Fluidleiteinheit" soll insbesondere eine Einheit verstanden werden, welche zumindest dazu vorgesehen ist, in zumindest einem Betriebszustand, insbesondere einem Reinigungsbetriebszustand, einen Fluidstrom, insbesondere eines Reinigungsfluids, vorteilhaft eines Waschwassers und besonders vorteilhaft eines Scheibenwaschwassers, zumindest abschnittsweise zu leiten. Ferner soll unter einem "Befestigungselement" insbesondere ein Element verstanden werden, welches in einem montierten Zustand dazu vorgesehen ist, an zumindest ein, insbesondere als Wischarm ausgebildetes, Objekt zu koppeln und/oder ein, insbesondere als Kanalelement ausgebildetes, weiteres Objekt an dem Objekt, insbesondere demontierbar und/oder lösbar, zu befestigen. Des Weiteren soll unter einem "Kanalelement" insbesondere ein Element verstanden werden, welches eine Kanalwand umfasst, die einen Kanal umschließt, und welches dazu vorgesehen ist, in zumindest einem Betriebszustand, insbesondere dem Reinigungsbetriebszustand, einen Fluidstrom, insbesondere des Reinigungsfluids, vorteilhaft des Waschwassers und besonders vorteilhaft des Scheibenwaschwassers, zumindest abschnittsweise zu leiten. Insbesondere ist dabei eine Fluidstromrichtung des Fluidstroms zumindest im Wesentlichen parallel zu einer Längserstreckungsrichtung des weiteren Objekts angeordnet. Ferner kann insbesondere das Kanalelement als ein, insbesondere unflexibles, Rohrelement ausgebildet sein. Vorteilhaft ist das Kanalelement jedoch als ein, insbesondere flexibles, Schlauchelement ausgebildet. Besonders vorteilhaft weist der Kanal in zumindest einem Teilabschnitt einen rechteckigen, insbesondere quadratischen, dreieckigen, ovalen, halbkreisförmigen und/oder vorzugsweise kreisrunden Kanalquerschnitt auf, wobei Ecken des Kanalquerschnitts abgerundet ausgebildet sein können. Besonders vorteilhaft ist das Kanalelement fluidtechnisch mit einem Fahrzeuginneren und/oder mit zumindest einer Düse verbunden. Unter dem Ausdruck "zumindest im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Längserstreckungsrichtung" eines Objekts soll insbesondere eine Richtung verstanden werden, welche parallel zu einer längsten Kante eines kleinsten das Objekt gerade noch umschließenden, insbesondere gedachten, Quaders ist. Durch diese Ausgestaltung kann insbesondere eine Wischervorrichtung mit verbesserten Eigenschaften hinsichtlich einer Effizienz, vorteilhaft einer Bauteileeffizienz, einer Montageeffizienz, einer Herstellungseffizienz und/oder einer Wartungseffizienz, bereitgestellt werden. Ferner kann insbesondere eine Flexibilität, vorteilhaft eine flexible Befestigung, ermöglicht werden. Vorteilhaft kann eine als flexibles Nachrüstteil ausgebildete Fluidleiteinheit realisiert werden. Ferner kann eine vorteilhafte Haltbarkeit, insbesondere unter Vermeidung eines Durchhängens eines Kanalelements, und/oder eine vorteilhafte Aerodynamik erreicht werden. Darüber hinaus kann eine einfache Bauweise, insbesondere ein paralleler Verlauf eines Wischarms zu einem Wischblatt ermöglicht werden. Zudem kann eine Ästhetik, insbesondere ein unauffälliges Design einer Fluidleiteinheit, realisiert werden.

Insbesondere um eine haltbare Befestigung und/oder um einen einfachen, fluiddichten und/oder flexiblen Anschluss des Kanalelements, insbesondere an Standardanschlüsse, zu ermöglichen, wird ferner vorgeschlagen, dass das Kanalelement weicher ist als das Befestigungselement. Vorteilhaft besteht das Kanalelement zumindest teilweise, insbesondere zu wenigstens einem Großteil und vorteilhaft vollständig, aus einem Gummi und/oder einer Gummimischung. Ferner besteht vorteilhaft das Befestigungselement zumindest teilweise, insbesondere zu wenigstens einem Großteil und vorteilhaft vollständig, aus einem Kunststoff, einem Metall, einer Metalllegierung und/oder einem Verbundwerkstoff, beispielsweise einem faserverstärkten Kunststoff.

In einer weiteren Ausgestaltung wird vorgeschlagen, dass das Kanalelement wenigstens eine, insbesondere als eine Düsenöffnung ausgebildete, Seitenöffnung, welche verschieden zu einer Haupteintrittsöffnung und verschieden zu einer Hauptaustrittsöffnung des Kanalelements ist, aufweist. Hierdurch kann eine vorteilhaft gleichmäßige und/oder großflächige Fluidverteilung, insbesondere zwischen einem Wischblattinnenkreis und einer Wischblatteinhängung, erreicht werden. Vorteilhaft weist das Kanalelement eine Mehrzahl an, insbesondere als Düsenöffnungen ausgebildete, Seitenöffnungen, welche verschieden zu einer Haupteintrittsöffnung und verschieden zu einer Hauptaustrittsöffnung des Kanalelements sind und welche insbesondere in regelmäßigen und vorteilhaft in gleichmäßigen Abständen zueinander angeordnet sind, auf. Besonders vorteilhaft durchströmt in zumindest einem Betriebszustand, insbesondere dem Reinigungsbetriebszustand, zumindest ein Teilfluidstrom in einer Teilfluidstromrichtung, welche verschieden von einer Längserstreckungsrichtung des Kanalelements ist, die Seitenöffnung. Vorteilhaft weist die Seitenöffnung in zumindest einem Teilabschnitt einen rechteckigen, insbesondere quadratischen, dreieckigen, ovalen, halbkreisförmigen und/oder kreisrunden Öffnungsquerschnitt auf, wobei Ecken des Öffnungsquerschnitts abgerundet ausgebildet sein können. Unter einer "Haupteintrittsöffnung" eines Kanalelements soll insbesondere eine Öffnung des Kanalelements verstanden werden, durch welche ein Hauptfluidstrom in das Kanalelement eindringt, welcher zu mehr als 50 %, insbesondere zu mehr als 70 %, vorteilhaft zu mehr als 85 % und besonders vorteilhaft zu mehr als 95 %, zu einer Durchflussrate aller in das Kanalelement eindringender Fluidströme beiträgt. Zudem soll unter einer "Hauptaustrittsöffnung" eines Kanalelements insbesondere eine Öffnung des Kanalelements verstanden werden, durch welche ein Hauptfluidstrom aus dem Kanalelement austritt, welcher zu mehr als 30 %, insbesondere zu mehr als 50 %, vorteilhaft zu mehr als 70 % und besonders vorteilhaft zu mehr als 85 %, zu einer Durchflussrate aller aus dem Kanalelement austretender Fluidströme beiträgt.

Insbesondere um eine Effizienz, vorteilhaft eine Bauteileeffizienz, eine Montageeffizienz und/oder eine Herstellungseffizienz, und/oder um eine Haltbarkeit zu realisieren wird zudem vorgeschlagen, dass die Fluidleiteinheit als ein einstückiges Mehrkomponentenbauteil, insbesondere Zweikomponentenbauteil, ausgebildet ist. Insbesondere weist die Fluidleiteinheit wenigstens zwei, insbesondere genau zwei, Komponenten auf, welche vorteilhaft einstückig miteinander verbunden und/oder ausgebildet sind. Vorteilhaft ist eine erste Komponente der Komponenten als das Befestigungselement und eine zweite Komponente der Komponenten als das Kanalelement ausgebildet. Insbesondere kann die Fluidleiteinheit mittels eines Spritzgussverfahrens hergestellt sein. Vorteilhaft ist die Fluidleiteinheit jedoch mittels eines Extrusionsverfahrens, insbesondere mittels eines Mehrkomponenten-Extrusionsverfahrens, hergestellt.

Des Weiteren wird vorgeschlagen, dass die Fluidleiteinheit über zumindest einen Großteil einer Längserstreckung und vorteilhaft über die gesamte Längserstreckung der Fluidleiteinheit ein gleichbleibendes Profil aufweist. Dadurch kann vorteilhaft eine Herstellungseffizienz verbessert werden. Insbesondere ist zumindest das gleichbleibende Profil mittels des Extrusionsverfahrens hergestellt. Vorteilhaft weist das Kanalelement über eine gesamte Längserstreckung des Kanalelements ein gleichbleibendes Profil auf. Ferner weist vorteilhaft das Befestigungselement über eine gesamte Längserstreckung des Befestigungselements ein gleichbleibendes Profil auf. Unter "zumindest einem Großteil einer Längserstreckung" eines Objektes soll insbesondere ein Teil des Objektes verstanden werden, welcher zu mehr als 50 %, insbesondere zu mehr als 70 %, vorteilhaft zu mehr als 85 % und besonders vorteilhaft zu mehr als 95 % zu einer Längserstreckung des Objektes in einer Längserstreckungsrichtung des Objektes beiträgt.

Das Befestigungselement könnte ein O-förmiges Profil aufweisen. Insbesondere um eine flexible und/oder haltbare Befestigung zu ermöglichen wird jedoch darüber hinaus vorgeschlagen, dass das Befestigungselement zumindest ein U-förmiges Profil, vorteilhaft zumindest ein C-förmiges Profil, aufweist. Ferner ist das Befestigungselement insbesondere dazu vorgesehen, ein weiteres Objekt, insbesondere den Wischarm, zumindest teilweise, insbesondere zu wenigstens einem Großteil und vorteilhaft vollständig, zu umgreifen. Unter einem "zumindest U-förmigen Profil" soll insbesondere ein Profil verstanden werden, welches zumindest zwei und insbesondere genau zwei Profilenden aufweist, wobei eine erste, insbesondere gedachte, Gerade, welche senkrecht zu einem Profilverlauf an einem ersten Profilende der Profilenden angeordnet ist, und eine zweite, insbesondere gedachte, Gerade, welche senkrecht zu einem Profilverlauf an einem zweiten Profilende der Profilenden angeordnet ist, einen Schnittpunkt aufweisen, der sich auf einem Rand, vorteilhaft innerhalb, eines kleinsten gedachten Rechtecks befindet, welches das Profil gerade noch umgibt. Ferner soll unter einem "zumindest C-förmigen Profil" insbesondere ein zumindest U-förmiges Profil verstanden werden, wobei sich der Schnittpunkt innerhalb des kleinsten gedachten Rechtecks befindet.

Ferner wird vorgeschlagen, dass das Kanalelement in einem montierten Zustand, insbesondere in dem zuvor genannten montierten Zustand, an einer dem Wischarm abgewandten Seite des Befestigungselements angeordnet ist. Vorteilhaft ist ferner das Kanalelement in dem montierten Zustand in einer Profilansicht betrachtet an einem Ende des Befestigungselements angeordnet. Zudem ist eine Längserstreckungsrichtung des Kanalelements zumindest im Wesentlichen parallel zu einer Längserstreckungsrichtung des Befestigungselements angeordnet. Besonders vorteilhaft weisen das Kanalelement und das Befestigungselement eine selbe Länge in Längserstreckungsrichtung auf. Dadurch kann eine vorteilhaft große Kontaktfläche des Befestigungselements zu dem Wischarm und somit insbesondere eine Haltbarkeit erreicht werden. Ferner können hierdurch vorteilhafte Seitenöffnungen in dem Kanalelement realisiert werden.

Gemäß einer weiteren Ausgestaltung wird vorgeschlagen, dass wenigstens ein dem Befestigungselement zugewandter Wandteil des Kanalelements eine höhere Wandstärke aufweist als wenigstens ein dem Befestigungselement abgewandter weiterer Wandteil des Kanalelements. Insbesondere ist der Wandteil des Kanalelements in einer Profilansicht betrachtet zumindest an einem Ende des Befestigungselements mit dem Befestigungselement verbunden. Vorteilhaft trägt der Wandteil des Kanalelements zu mehr als der Hälfte zu einem Außenradius des Kanalelements bei. Besonders vorteilhaft trägt der weitere Wandteil des Kanalelements zu weniger als der Hälfte zu einem weiteren Außenradius des Kanalelements bei. Hierdurch kann vorteilhaft eine Haltbarkeit erhöht und/oder eine Materialeffizienz erreicht werden.

Ferner geht die Erfindung aus von einem Wischer, insbesondere Scheibenwischer, mit einer Wischervorrichtung nach einem der vorhergehenden Ansprüche. Insbesondere ist der Wischer als ein Scheibenwischer, vorteilhaft als ein Fahrzeugscheibenwischer und besonders vorteilhaft als ein Kraftfahrzeugscheibenwischer ausgebildet. Durch diese Ausgestaltung kann insbesondere eine Wischervorrichtung mit verbesserten Eigenschaften hinsichtlich einer Effizienz, vorteilhaft einer Bauteileeffizienz, einer Montageeffizienz, einer Herstellungseffizienz und/oder einer Wartungseffizienz, bereitgestellt werden. Ferner kann insbesondere eine Flexibilität, vorteilhaft eine flexible Befestigung, ermöglicht werden. Vorteilhaft kann eine als flexibles Nachrüstteil ausgebildete Fluidleiteinheit realisiert werden. Ferner kann eine vorteilhafte Haltbarkeit, insbesondere unter Vermeidung eines Durchhängens eines Kanalelements, und/oder eine vorteilhafte Aerodynamik erreicht werden. Darüber hinaus kann eine einfache Bauweise, insbesondere ein paralleler Verlauf eines Wischarms zu einem Wischblatt ermöglicht werden. Zudem kann eine Ästhetik, insbesondere ein unauffälliges Design einer Fluidleiteinheit, realisiert werden.

Die erfindungsgemäße Wischervorrichtung und der erfindungsgemäße Wischer sollen hierbei nicht auf die oben beschriebene Anwendung und Ausführungsform beschränkt sein. Insbesondere können die erfindungsgemäße Wischervorrichtung und der erfindungsgemäße Wischer zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen als Scheibenwischer ausgebildeten Wischer mit einem Wischblatt, mit einem Teil eines Wischarms, mit einem Wischblattadapter und mit einer Wischervorrichtung, die einen Wischarmadapter und eine Fluidleiteinheit aufweist, in einer perspektivischen Ansicht,
- Fig. 2: einen Querschnitt durch den Wischarm, durch das Wischblatt und durch die Fluidleiteinheit, von einem Innenkreis zu einem Außenkreis hin betrachtet,
- Fig. 3: einen Querschnitt durch den Wischarm und durch die Fluidleiteinheit in einem montierten Zustand der Fluidleiteinheit,
- Fig. 4: einen Querschnitt durch den Wischarm und durch die Fluidleiteinheit in einem Zwischenmontagezustand der Fluidleiteinheit,
- Fig. 5: einen Querschnitt durch die Fluidleiteinheit in einem demontierten Zustand der Fluidleiteinheit,
- Fig. 6: eine perspektivische Ansicht eines Teils des Wischarms und eines Teils der Fluidleiteinheit ohne eine Düseneinheit in dem montierten Zustand der Fluidleiteinheit,
- Fig. 7: eine perspektivische Ansicht eines Teils des Wischarms und eines Teils der Wischervorrichtung mit der Fluidleiteinheit und einer Düseneinheit in einem demontierten Zustand des Wischarms,
- Fig. 8: eine perspektivische Ansicht eines Teils des Wischarms, eines Teils der Fluidleiteinheit und der Düseneinheit in dem demontierten Zustand des Wischarms,
- Fig. 9: eine perspektivische Ansicht der Wischervorrichtung in einem montierten Zustand des Wischarms,
- Fig. 10: eine perspektivische Ansicht eines Teils des Wischblatts, eines Teils des Wischblattadapters, des Wischarmadapters und des Abdeckelements in dem demontierten Zustand des Wischarms,
- Fig. 11: den Wischarmadapter mit dem Abdeckelement in einer Längsrichtung betrachtet,
- Fig. 12: eine Ansicht auf eine Düsenseite eines Teils des Wischers mit der Wischervorrichtung,
- Fig. 13: einen Teil des Wischers mit der Wischervorrichtung in einer Abdeckrichtung betrachtet,
- Fig. 14: einen Teil des Wischers mit der Wischervorrichtung in einer Draufsicht und
- Fig. 15: eine Ansicht auf eine der Düsenseite entgegengesetzte Seite eines Teils des Wischers mit der Wischervorrichtung.

### Beschreibung des Ausführungsbeispiels

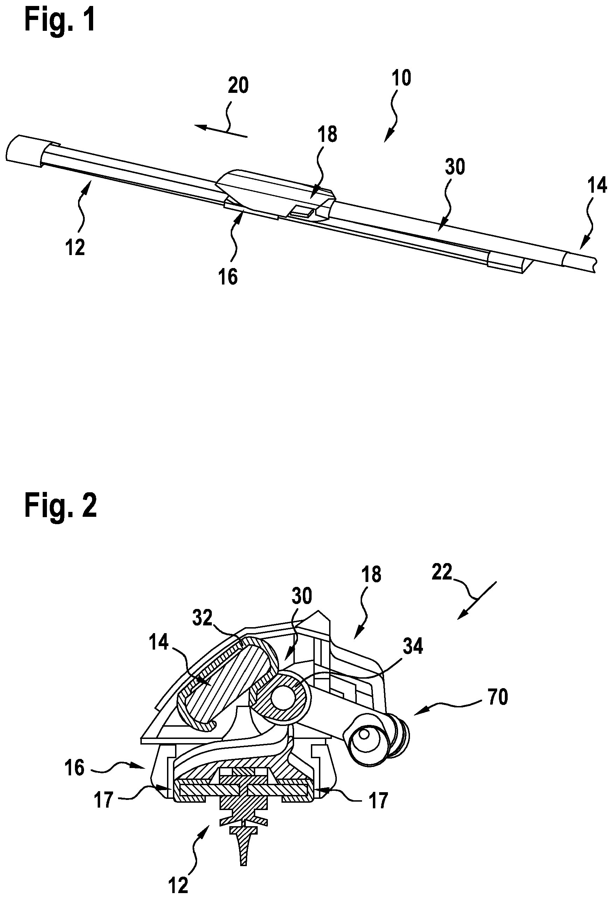

Figur 1 zeigt einen beispielhaft als ein Scheibenwischer ausgebildeten Wischer 10. Im vorliegenden Fall ist der Wischer 10 als ein Fahrzeugscheibenwischer, insbesondere als ein Kraftfahrzeugscheibenwischer ausgebildet. Der Wischer 10 ist in einem montierten Zustand dargestellt. Der Wischer 10 ist zumindest in einem Reinigungsbetriebszustand dazu vorgesehen, eine nicht näher dargestellte Wischfläche von Nässe und/oder Verschmutzung zu reinigen. Im vorliegenden Fall ist die Wischfläche als eine Scheibe, insbesondere eine Fahrzeugscheibe, ausgebildet. Grundsätzlich ist auch denkbar, dass eine Scheibe als eine Fensterscheibe ausgebildet ist.

Der Wischer 10 umfasst ein Wischblatt 12. Eine Längserstreckungsrichtung des Wischblatts 12 definiert eine Längsrichtung 20. Das Wischblatt 12 bildet in dem montierten Zustand einen Formschluss mit der Wischfläche. Das Wischblatt 12 ist zumindest in dem Reinigungsbetriebszustand dazu vorgesehen, Nässe und/oder Verschmutzung von der Wischfläche zu ziehen.

Des Weiteren weist der Wischer 10 einen Wischarm 14 auf. Im vorliegenden Fall ist eine Längserstreckungsrichtung des Wischarms 14 parallel zu der Längsrichtung 20 angeordnet. Alternativ könnte eine Längserstreckung eines Wischarms verschieden von einer Längsrichtung sein.

Der Wischer 10 umfasst einen Wischblattadapter 16. Der Wischblattadapter 16 weist einen Kontaktbereich 17 zu dem Wischblatt 12 auf (vgl. Figur 2).

Ferner weist der Wischer 10 eine Wischervorrichtung auf. Die Wischervorrichtung ist als eine Scheibenwischervorrichtung ausgebildet. Die Wischervorrichtung ist im vorliegenden Fall als eine Fahrzeugscheibenwischervorrichtung, insbesondere als eine Kraftfahrzeugscheibenwischervorrichtung, ausgebildet.

Die Wischervorrichtung umfasst einen Wischarmadapter 18. Der Wischarmadapter 18 ist im vorliegenden Fall als ein einziges Bauteil ausgebildet. Der Wischarmadapter 18 ist zu einer lösbaren Verbindung des Wischblatts 12 an dem Wischarm 14 vorgesehen. Der Wischarmadapter 18 ist dazu vorgesehen, den Wischarm 14 mit dem Wischblattadapter 16 lösbar zu verbinden. Der Wischarmadapter 18 ist dazu vorgesehen, den Wischarm 14 mittels des Wischblattadapters 16 lösbar mit dem Wischblatt 12 zu verbinden. Der Wischblattadapter 16 ist dazu vorgesehen, das Wischblatt 12 mittels des Wischarmadapters 18 lösbar mit dem Wischarm 14 zu verbinden. Alternativ könnte ein Wischarmadapter mehrteilig ausgebildet sein. Ferner könnte ein Wischarmadapter zu einer permanenten Verbindung eines Wischblatts an einem Wischarm vorgesehen sein.

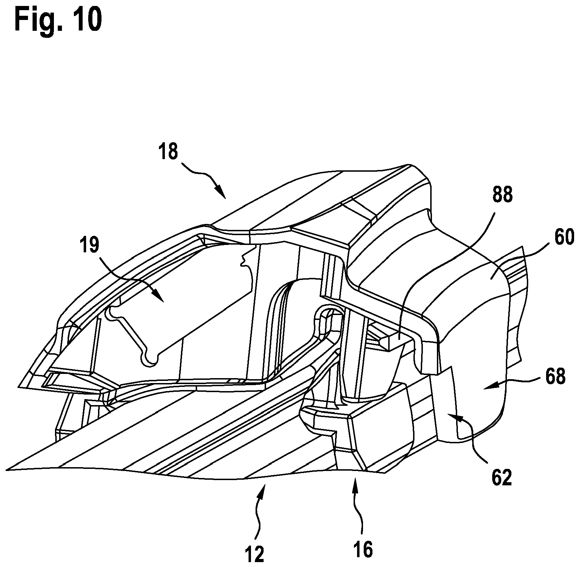

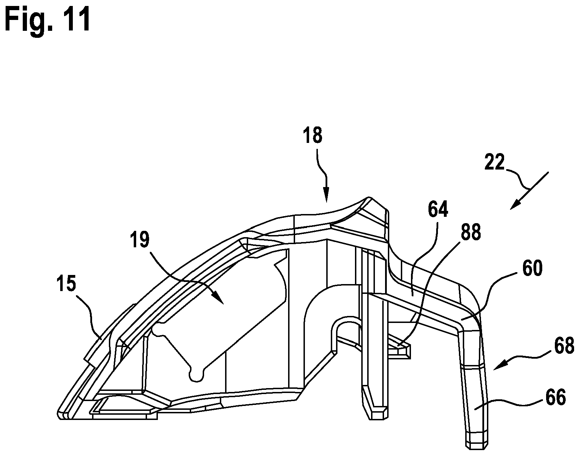

Der Wischarmadapter 18 weist einen Kontaktbereich 19 zu dem Wischarm 14, im vorliegenden Fall zu einem Kopplungselement 90 des Wischarms 14, auf (vgl. Figuren 10 und 11). Der Wischarmadapter 18 weist ein Betätigungselement 15 auf. Das Betätigungselement 15 ist als ein Betätigungsknopf ausgebildet. Das Betätigungselement 15 ist dazu vorgesehen, eine lösbare Verbindung zwischen dem Wischarmadapter 18 und dem Wischarm 14 zu verriegeln und zu entriegeln. Dadurch kann in einem Servicefall das Wischblatt 12 zusammen mit dem Wischblattadapter 16 und dem Wischarmadapter 18 ausgetauscht werden.

Die Wischervorrichtung umfasst eine Fluidleiteinheit 30, welche in den Figuren 2 bis 6 näher dargestellt ist. Die Fluidleiteinheit 30 ist einstückig ausgebildet. Die Fluidleiteinheit 30 ist als ein Mehrkomponentenbauteil ausgebildet. Im vorliegenden Fall ist die Fluidleiteinheit 30 als ein Zweikomponentenbauteil ausgebildet. Die Fluidleiteinheit 30 umfasst zwei Komponenten. Die Fluidleiteinheit 30 weist im vorliegenden Fall über eine gesamte Längserstreckung der Fluidleiteinheit 30 ein gleichbleibendes Profil auf. Die Fluidleiteinheit 30 ist mittels eines Extrusionsverfahrens hergestellt. Im vorliegenden Fall ist die Fluidleiteinheit 30 mittels eines Mehrkomponenten-Extrusionsverfahrens hergestellt. Die Fluidleiteinheit 30 ist dazu vorgesehen, bei einer Montage auf den Wischarm 14 geklipst zu werden. Die Fluidleiteinheit 30 ist dazu vorgesehen, zumindest in dem Reinigungsbetriebszustand ein Reinigungsfluid zu leiten. Im vorliegenden Fall ist das Reinigungsfluid als ein Waschwasser, insbesondere als ein Scheibenwaschwasser ausgebildet. Alternativ könnte eine Fluidleiteinheit mehrteilig ausgebildet sein. Ferner könnte eine Fluidleiteinheit lediglich eine Komponente oder zumindest drei Komponenten aufweisen. Zudem könnte eine Fluidleiteinheit mittels eines Spritzgussverfahrens, insbesondere eines Mehrkomponenten-Spritzgussverfahrens, hergestellt sein. Zudem könnte eine Fluidleiteinheit dazu vorgesehen sein, bei einer Montage auf einen Wischarm geschoben zu werden.

Die Fluidleiteinheit 30 weist ein Befestigungselement 32 auf. Das Befestigungselement 32 ist als eine erste Komponente der Komponenten ausgebildet. Das Befestigungselement 32 weist über eine gesamte Längserstreckung des Befestigungselements 32 ein gleichbleibendes Profil auf. Das Befestigungselement 32 weist zumindest ein U-förmiges Profil auf. Im vorliegenden Fall weist das Befestigungselement 32 zumindest ein C-förmiges Profil auf. Alternativ könnte eine Fluidleiteinheit mehrere Befestigungselemente aufweisen. Ferner könnte ein Befestigungselement lediglich über einen Teil einer Längserstreckung des Befestigungselements ein gleichbleibendes Profil aufweisen. Zudem könnte ein Befestigungselement ein O-förmiges Profil aufweisen.

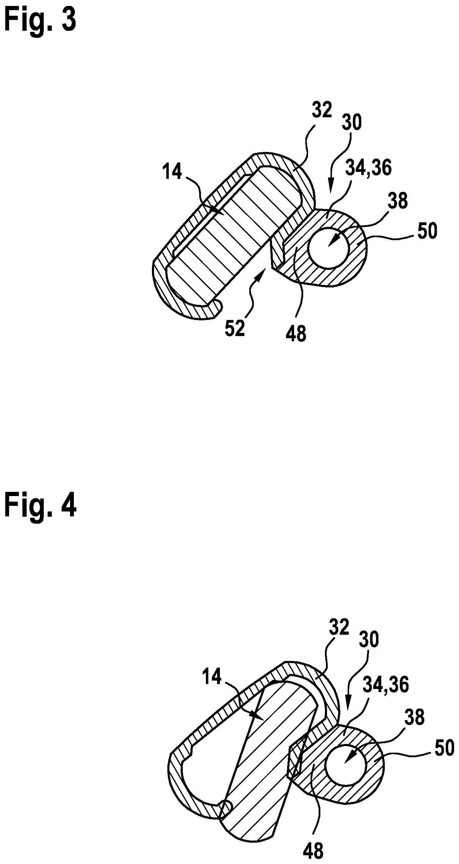

Das Befestigungselement 32 ist zu einer Befestigung an dem Wischarm 14 vorgesehen. Das Befestigungselement 32 ist zu einer lösbaren Befestigung der Fluidleiteinheit 30 an dem Wischarm 14 vorgesehen. Das Befestigungselement 32 ist dazu vorgesehen, den Wischarm 14 zumindest zu einem Großteil zu umgreifen. Im vorliegenden Fall wird das Befestigungselement 32 bei einer in Figur 4 gezeigten Montage auf den Wischarm 14 gesteckt. Dazu werden zwei Enden des Befestigungselements 32 ausgelenkt. Alternativ könnte ein Befestigungselement zu einer permanenten Befestigung einer Fluidleiteinheit an einem Wischarm vorgesehen sein. Ferner könnte ein Befestigungselement bei einer Montage auf einen Wischarm geschoben werden.

Die Fluidleiteinheit 30 umfasst ein Kanalelement 34. Das Kanalelement 34 ist in dem montierten Zustand, welcher in Figur 3 gezeigt ist, an einer dem Wischarm 14 abgewandten Seite des Befestigungselements 32 angeordnet. Das Kanalelement 34 ist in dem montierten Zustand an einer Windschattenseite des Befestigungselements 32 angeordnet. Das Kanalelement 34 ist in dem montierten Zustand in einer Profilansicht betrachtet an einem Ende 52 des Befestigungselements 32 angeordnet. Eine Längserstreckungsrichtung des Kanalelements 34 ist parallel zu einer Längserstreckungsrichtung des Befestigungselements 32 angeordnet. Das Kanalelement 34 ist als eine zweite Komponente der Komponenten ausgebildet. Das Kanalelement 34 ist flexibel ausgebildet. Das Kanalelement 34 ist als ein Schlauchelement ausgebildet. Das Kanalelement 34 weist über eine gesamte Längserstreckung des Kanalelements 34 ein gleichbleibendes Profil auf. Das Kanalelement 34 ist zu einer Führung eines Fluidstroms des Reinigungsfluids vorgesehen. Alternativ könnte eine Fluidleiteinheit mehrere Kanalelemente aufweisen. Ferner könnte ein Kanalelement in einem montierten Zustand an einer einem Wischarm zugewandten Seite eines Befestigungselements angeordnet sein. Zudem könnte ein Kanalelement in einem montierten Zustand an einer Windseite eines Befestigungselements angeordnet sein. Des Weiteren könnte ein Kanalelement an einem Mittelabschnitt eines Befestigungselements angeordnet sein. Grundsätzlich ist es auch denkbar, dass ein Kanalelement starr ausgebildet ist. Zudem ist denkbar, dass ein Kanalelement als ein Rohrelement ausgebildet ist. Ferner könnte ein Kanalelement lediglich über einen Teil einer Längserstreckung des Kanalelements ein gleichbleibendes Profil aufweisen.

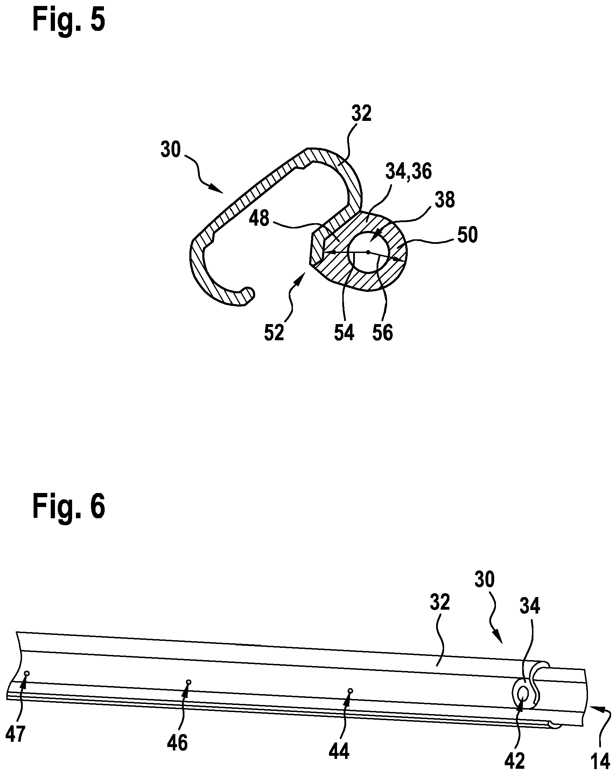

Das Kanalelement 34 ist durch eine Kanalwand 36 gebildet. Ein dem Befestigungselement 32 zugewandter Wandteil 48 des Kanalelements 34 weist eine höhere Wandstärke auf als ein dem Befestigungselement 32 abgewandter weiterer Wandteil 50 des Kanalelements 34. Beispielsweise ist der Wandteil 48 des Kanalelements 34 in einer Profilansicht betrachtet zumindest an dem Ende 52 des Befestigungselements 32 mit dem Befestigungselement 32 verbunden. Im vorliegenden Fall trägt der Wandteil 48 des Kanalelements 34 zu mehr als der Hälfte zu einem Außenradius 54 des Kanalelements 34 bei (vgl. Figur 5). Ferner trägt im vorliegenden Fall der weitere Wandteil 50 des Kanalelements 34 zu weniger als der Hälfte zu einem weiteren Außenradius 56 des Kanalelements 34 bei. Alternativ könnte ein Kanalelement eine gleichmäßige Wandstärke aufweisen. Zudem könnte ein Wandteil eines Kanalelements an einem von einem Ende verschiedenen Teil eines Befestigungselements mit dem Befestigungselement verbunden sein.

Das Kanalelement 34 umschließt einen Kanal 38. Der Kanal 38 weist im vorliegenden Fall einen kreisrunden Kanalquerschnitt auf. Der Kanal 38 ist zu einer Aufnahme des Fluidstroms vorgesehen. Das Kanalelement 34 weist eine nicht weiter dargestellte Haupteintrittsöffnung auf. Die Haupteintrittsöffnung ist fluidtechnisch mit einem Fahrzeuginneren verbunden. Ferner weist das Kanalelement 34 eine in Figur 6 dargestellte Hauptaustrittsöffnung 42 auf. Das Kanalelement 34 weist wenigstens zwei Seitenöffnungen 44, 46 auf. Im vorliegenden Fall weist das Kanalelement 34 eine dritte Seitenöffnung 47 auf. Ferner weist das Kanalelement 34 weitere, nicht gezeigte Seitenöffnungen auf. Alternativ könnte ein Kanal einen ovalen, einen halbkreisförmigen, einen dreieckigen und/oder einen rechteckigen, insbesondere quadratischen, Kanalquerschnitt aufweisen, wobei Ecken in dem Kanalquerschnitt abgerundet ausgebildet sein können. Grundsätzlich ist auch denkbar, dass ein Kanalelement lediglich eine Seitenöffnung aufweist.

Die Seitenöffnungen 44, 46, die dritte Seitenöffnung 47 und die weiteren Seitenöffnungen sind in gleichmäßigen Abständen zueinander angeordnet. Ein Abstand einer ersten Seitenöffnung 44 der Seitenöffnungen 44, 46 zu einer zweiten Seitenöffnung 46 der Seitenöffnungen 44, 46 ist gleich einem Abstand der zweiten Seitenöffnung 46 zu der dritten Seitenöffnung 47. Die Seitenöffnungen 44, 46 sind verschieden zu der Haupteintrittsöffnung ausgebildet. Ferner sind die Seitenöffnungen 44, 46 verschieden zu der Hauptaustrittsöffnung 42 ausgebildet. Die Seitenöffnungen 44, 46 sind im vorliegenden Fall als Düsenöffnungen ausgebildet. Die Seitenöffnungen 44, 46 weisen im vorliegenden Fall einen kreisrunden Öffnungsquerschnitt auf. Alternativ könnten Seitenöffnungen in unregelmäßigen Abständen zueinander angeordnet sein. Ferner könnten Seitenöffnungen einen ovalen, einen halbkreisförmigen, einen dreieckigen und/oder einen rechteckigen, insbesondere quadratischen, Öffnungsquerschnitt aufweisen, wobei Ecken in dem Öffnungsquerschnitt abgerundet ausgebildet sein können.

Zumindest in dem Reinigungsbetriebszustand durchströmt ein erster Teilfluidstrom eine erste Seitenöffnung 44 der Seitenöffnungen 44, 46. Der erste Teilfluidstrom durchströmt die erste Seitenöffnung 44 in einer ersten Teilfluidstromrichtung. Die erste Teilfluidstromrichtung ist verschieden von einer Längserstreckungsrichtung des Kanalelements 34 ausgebildet. Ferner durchströmt in dem Reinigungsbetriebszustand ein zweiter Teilfluidstrom eine zweite Seitenöffnung 46 der Seitenöffnungen 44, 46. Der zweite Teilfluidstrom durchströmt die zweite Seitenöffnung 46 in einer zweiten Teilfluidstromrichtung. Die zweite Teilfluidstromrichtung ist verschieden von einer Längserstreckungsrichtung des Kanalelements 34 ausgebildet.

Das Kanalelement 34 ist verschieden von dem Befestigungselement 32 ausgebildet. Das Kanalelement 34 ist einstückig mit dem Befestigungselement 32 ausgebildet. Das Befestigungselement 32 und das Kanalelement 34 sind aus verschiedenen Materialien gebildet. Im vorliegenden Fall sind das Befestigungselement 32 und das Kanalelement 34 vollständig aus verschiedenen Materialien gebildet. Das Kanalelement 34 ist weicher als das Befestigungselement 32. Im vorliegenden Fall weisen das Kanalelement 34 und das Befestigungselement 32 eine selbe Länge in Längserstreckungsrichtung auf. Grundsätzlich ist auch denkbar, dass ein Kanalelement und ein Befestigungselement lösbar miteinander verbunden sind. Zudem könnten ein Kanalelement und ein Befestigungselement aus einem selben Material bestehen. Ferner könnten ein Kanalelement und ein Befestigungselement eine selbe Härte aufweisen. Es ist auch denkbar, dass ein Kanalelement und ein Befestigungselement verschiedene Längen in Längserstreckungsrichtung aufweisen.

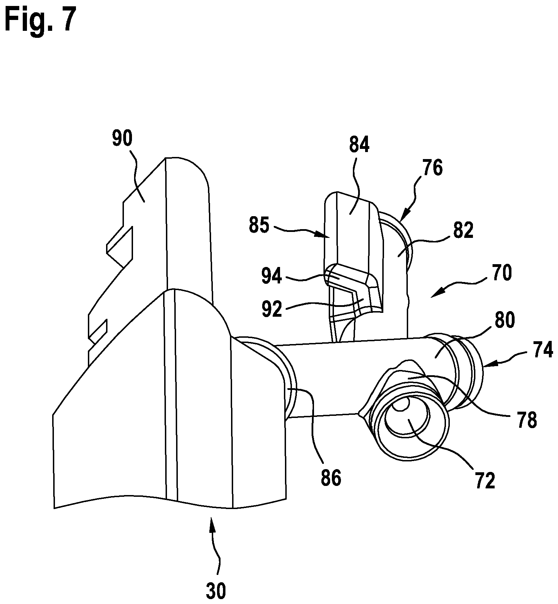

Die Wischervorrichtung umfasst eine Düseneinheit 70 (vgl. Figuren 7 bis 9). Die Düseneinheit 70 ist fluidtechnisch mit dem Kanalelement 34 verbunden. Die Düseneinheit 70 ist fluidtechnisch mit der Hauptaustrittsöffnung 42 verbunden. Die Düseneinheit 70 ist dazu vorgesehen, zumindest in dem Reinigungsbetriebszustand ein Reinigungsfluid auf der Scheibe aufzubringen. Die Fluidleiteinheit 30 ist dazu vorgesehen, der Düseneinheit 70 das Reinigungsfluid zuzuführen.

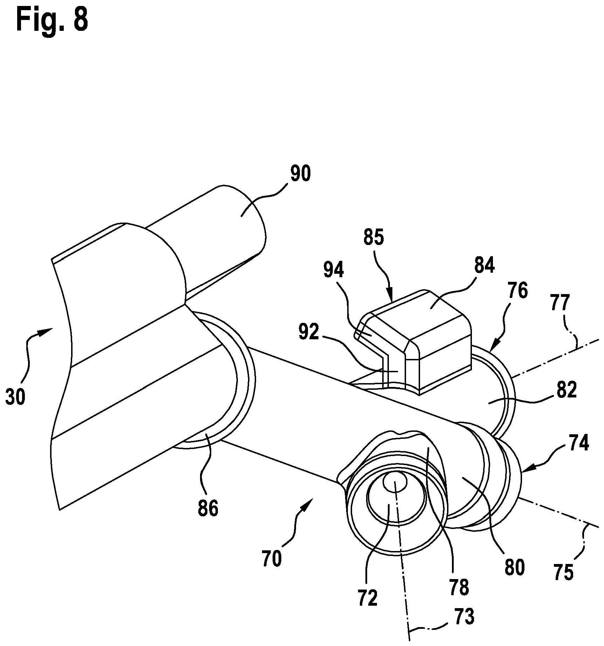

Die Düseneinheit 70 umfasst ein erstes Fluidleitelement 78. Das erste Fluidleitelement 78 ist als ein erstes Rohrelement ausgebildet. Die Düseneinheit 70 weist ein erstes Düsenelement 72 auf. Das erste Düsenelement 72 ist mit dem ersten Fluidleitelement 78 direkt fluidtechnisch verbunden. Das erste Fluidleitelement 78 ist dazu vorgesehen, dem ersten Düsenelement 72 einen ersten Teilfluidstrom zuzuführen. Das erste Düsenelement 72 ist dazu vorgesehen, den ersten Teilfluidstrom zu emittieren. Das erste Düsenelement 72 weist eine erste Strahlachse 73 auf (vgl. Figur 8).

Die Düseneinheit 70 weist ein zweites Fluidleitelement 80 auf. Das zweite Fluidleitelement 80 ist als ein zweites Rohrelement ausgebildet. Die Düseneinheit 70 weist ein zweites Düsenelement 74 auf. Das zweite Düsenelement 74 ist mit dem zweiten Fluidleitelement 80 direkt fluidtechnisch verbunden. Das zweite Fluidleitelement 80 ist dazu vorgesehen, dem zweiten Düsenelement 74 einen zweiten Teilfluidstrom zuzuführen. Das zweite Düsenelement 74 ist dazu vorgesehen, den zweiten Teilfluidstrom zu emittieren. Das zweite Düsenelement 74 weist eine zweite Strahlachse 75 auf.

Die Düseneinheit 70 umfasst ein drittes Fluidleitelement 82. Das dritte Fluidleitelement 82 ist als ein drittes Rohrelement ausgebildet. Im vorliegenden Fall umfasst die Düseneinheit 70 ein drittes Düsenelement 76. Das dritte Düsenelement 76 ist mit dem dritten Fluidleitelement 82 direkt fluidtechnisch verbunden. Das dritte Fluidleitelement 82 ist dazu vorgesehen, dem dritten Düsenelement 76 einen dritten Teilfluidstrom zuzuführen. Das dritte Düsenelement 76 ist dazu vorgesehen, den dritten Teilfluidstrom zu emittieren. Im vorliegenden Fall weist das dritte Düsenelement 76 eine dritte Strahlachse 77 auf. Alternativ könnte eine Düseneinheit lediglich ein Fluidleitelement, lediglich zwei Fluidleitelemente, mehr als drei Fluidleitelemente, lediglich ein Düsenelement, lediglich zwei Düsenelemente und/oder mehr als drei Düsenelemente aufweisen. Zudem könnte zumindest ein Fluidleitelement als ein Rohrelement ausgebildet sein.

Der Fluidstrom des Reinigungsfluids speist den ersten Teilfluidstrom, den zweiten Teilfluidstrom und den dritten Teilfluidstrom. Das erste Fluidleitelement 78, das zweite Fluidleitelement 80 und das dritte Fluidleitelement 82 bilden eine verästelte Leitung aus. Die erste Strahlachse 73 und die zweite Strahlachse 75 schließen einen Winkel von wenigstens 5° ein. Im vorliegenden Fall schließen die erste Strahlachse 73 und die zweite Strahlachse 75 einen Winkel von wenigstens 135° ein. Die erste Strahlachse 73 und die dritte Strahlachse 77 schließen einen Winkel von wenigstens 5° ein. Im vorliegenden Fall schließen die erste Strahlachse 73 und die dritte Strahlachse 77 einen Winkel von wenigstens 135° ein. Die zweite Strahlachse 75 und die dritte Strahlachse 77 schließen einen Winkel von wenigstens 5° ein. Im vorliegenden Fall schließen die zweite Strahlachse 75 und die dritte Strahlachse 77 einen Winkel von 30° ein. Grundsätzlich ist auch denkbar, dass wenigstens zwei Düsenelemente Strahlachsen aufweisen, welche parallel zueinander angeordnet sind.

Die Düseneinheit 70 weist ein erstes Kopplungselement 84 auf. Das erste Kopplungselement 84 ist zu einer Kopplung mit dem Wischarmadapter 18 vorgesehen. Das erste Kopplungselement 84 ist schienenartig ausgebildet. Das erste Kopplungselement 84 weist in einer Längserstreckungsrichtung des ersten Kopplungselements 84 betrachtet ein L-förmiges Profil auf. Das L-förmige Profil des ersten Kopplungselements 84 weist einen ersten Schenkel 92 auf. Der erste Schenkel 92 ist als ein kurzer Schenkel ausgebildet. Der erste Schenkel 92 ist mit dem dritten Fluidleitelement 82 als ein einziges Bauteil ausgebildet. Ferner weist das L-förmige Profil des ersten Kopplungselements 84 einen zweiten Schenkel 94 auf. Der zweite Schenkel 94 ist als ein langer Schenkel ausgebildet.

Der zweite Schenkel 94 ist länger ausgebildet als der erste Schenkel 92. Der erste Schenkel 92 ist mit dem zweiten Schenkel 94 als ein einziges Bauteil ausgebildet. Der zweite Schenkel 94 bildet ein Ende 85 des L-förmigen Profils des ersten Kopplungselements 84. Ferner schließt im vorliegenden Fall der erste Schenkel 92 des L-förmigen Profils mit dem zweiten Schenkel 94 des L-förmigen Profils einen Winkel von mehr als 90°, im vorliegenden Fall von mehr als 120°, und von weniger als 180°, im vorliegenden Fall von weniger als 135°, ein. Alternativ könnten zwei Schenkel eines L-förmigen Profils eines Kopplungselements gleich lang ausgebildet sein. Grundsätzlich ist auch denkbar, dass ein erster Schenkel mit einem zweiten Schenkel eines L-förmigen Profils eines Kopplungselements einen Winkel von 90° oder weniger einschließt.

Die Düseneinheit 70 umfasst ein zweites Kopplungselement 86. Das zweite Kopplungselement 86 ist zu einer Kopplung mit einem weiteren Bauteil vorgesehen. Im vorliegenden Fall ist das weitere Bauteil als die Fluidleiteinheit 30 ausgebildet. Alternativ könnte eine Düseneinheit lediglich ein Kopplungselement oder mehr als drei Kopplungselemente aufweisen, welche zu einer Kopplung mit einem Wischarmadapter vorgesehen sind. Zudem könnte zumindest ein Kopplungselement als ein Rastelement und/oder als ein Gewindeelement ausgebildet sein. Ferner könnte ein Kopplungselement ein von einer L-Form abweichendes Profil aufweisen, beispielsweise ein F-förmiges Profil, ein H-förmiges Profil und/oder ein andersartiges Profil. Es ist auch denkbar, dass ein weiteres Bauteil als ein Wischarm ausgebildet ist.

Der Wischarmadapter 18 weist ein drittes Kopplungselement 88 auf (vgl. Figuren 10 und 11). Das dritte Kopplungselement 88 ist als ein Führungselement ausgebildet. Das dritte Kopplungselement 88 ist schienenartig ausgebildet. Das dritte Kopplungselement 88 ist dazu vorgesehen, die Düseneinheit 70 bei einer Montage zu führen. Das dritte Kopplungselement 88 ist dazu vorgesehen, in dem montierten Zustand die Düseneinheit 70 in einer Richtung senkrecht zu der Längsrichtung 20 an dem Wischarmadapter 18 abzustützen. Alternativ könnte ein Wischarmadapter mehrere Kopplungselemente aufweisen. Zudem könnte zumindest ein Kopplungselement eines Wischarmadapters als ein Rastelement und/oder als ein Gewindeelement ausgebildet sein.

Das erste Kopplungselement 84 und das dritte Kopplungselement 88 sind zueinander korrespondierend ausgebildet. Das dritte Kopplungselement 88 ist dazu vorgesehen, eine lösbare Aufnahme des ersten Kopplungselements 84 bereitzustellen. Das erste Kopplungselement 84 und das dritte Kopplungselement 88 sind bei einer Montage dazu vorgesehen, zu einer Führung der Düseneinheit 70 an dem Wischarmadapter 18 zusammenzuwirken. Ferner sind das erste Kopplungselement 84 und das dritte Kopplungselement 88 in einem montierten Zustand dazu vorgesehen, zu einer Abstützung der Düseneinheit 70 an dem Wischarmadapter 18 zusammenzuwirken.

Die Wischervorrichtung weist ein Abdeckelement 60 auf. Das Abdeckelement 60 ist als ein Teil eines einzigen Bauteils ausgebildet. Der Wischarmadapter 18 umfasst das Abdeckelement 60. Der Wischarmadapter 18 und das Abdeckelement 60 bilden ein einziges Bauteil aus. Ein Teilabschnitt 68 des Abdeckelements 60 ist scheibenartig ausgebildet. Eine Oberfläche des Teilabschnitts 68 des Abdeckelements 60 ist im vorliegenden Fall parallel zu der Längsrichtung 20 angeordnet. Im vorliegenden Fall ist eine Umrissfläche des Abdeckelements 60 in der Längsrichtung 20 betrachtet kleiner als in einer jeden weiteren Richtung betrachtet. Das Abdeckelement 60 ist lichtundurchlässig ausgebildet. Alternativ könnte eine Wischervorrichtung mehrere Abdeckelemente aufweisen. Es ist auch denkbar, dass ein Abdeckelement separat von einem weiteren Bauteil eines Wischarmadapters ausgebildet ist. Ferner könnte ein gesamtes Abdeckelement plattenartig und/oder scheibenartig ausgebildet sein. Zudem könnte eine Umrissfläche eines Abdeckelements in einer von einer Längsrichtung abweichenden Richtung betrachtet kleiner als in einer jeden weiteren Richtung betrachtet sein.

Das Abdeckelement 60 weist in der Längsrichtung 20 betrachtet ein L-förmiges Profil auf (vgl. Figur 11). Das L-förmige Profil des Abdeckelements 60 umfasst einen weiteren ersten Schenkel 64. Der weitere erste Schenkel 64 ist als ein kurzer Schenkel ausgebildet. Ferner umfasst das L-förmige Profil des Abdeckelements 60 einen weiteren zweiten Schenkel 66. Der weitere zweite Schenkel 66 ist als ein langer Schenkel ausgebildet. Der weitere zweite Schenkel 66 ist länger ausgebildet als der weitere erste Schenkel 64. Der weitere erste Schenkel 64 ist mit dem weiteren zweiten Schenkel 66 als ein einziges Bauteil ausgebildet. Der weitere zweite Schenkel 66 bildet ein freies Ende des L-förmigen Profils des Abdeckelements 60. Im vorliegenden Fall schließt der weitere erste Schenkel 64 des L-förmigen Profils mit dem weiteren zweiten Schenkel 66 des L-förmigen Profils einen Winkel von mehr als 90°, im vorliegenden Fall von mehr als 110°, und von weniger als 180°, im vorliegenden Fall von weniger als 120°, ein. Alternativ könnte ein Abdeckelement ein von einer L-Form abweichendes Profil aufweisen, beispielsweise ein F-förmiges Profil, ein H-förmiges Profil und/oder ein andersartiges Profil. Ferner könnten zwei Schenkel eines L-förmigen Profils eines Abdeckelements gleich lang ausgebildet sein. Grundsätzlich ist auch denkbar, dass ein erster Schenkel mit einem zweiten Schenkel eines Profils eines Abdeckelements einen Winkel von 90° oder weniger einschließt.

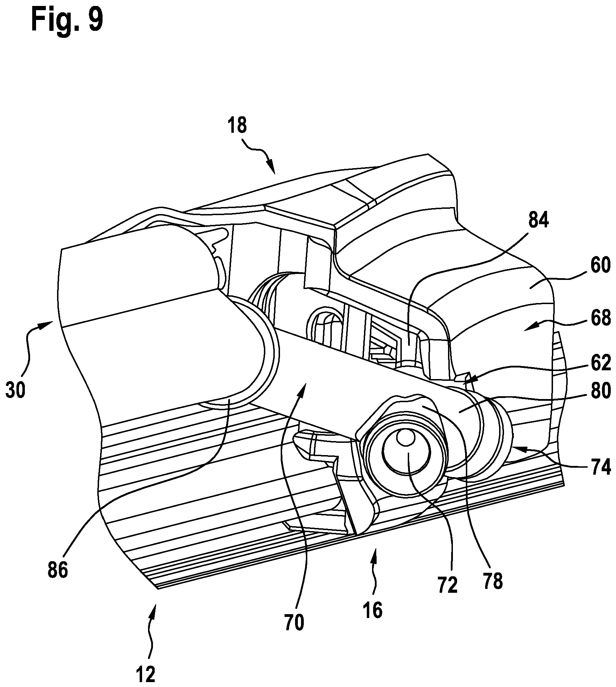

Das Abdeckelement 60 weist eine Ausnehmung 62 auf (vgl. Figuren 9 und 10). Das zweite Düsenelement 74 durchdringt teilweise die Ausnehmung 62 des Abdeckelements 60. Die Ausnehmung 62 ist in einem dem Wischarm 14 zugewandten Randbereich des Abdeckelements 60 angeordnet. Alternativ könnte ein Abdeckelement frei von einer Ausnehmung sein oder mehrere Ausnehmungen aufweisen. Ferner könnte zumindest eine Ausnehmung von einem Abdeckelement vollständig umschlossen sein.

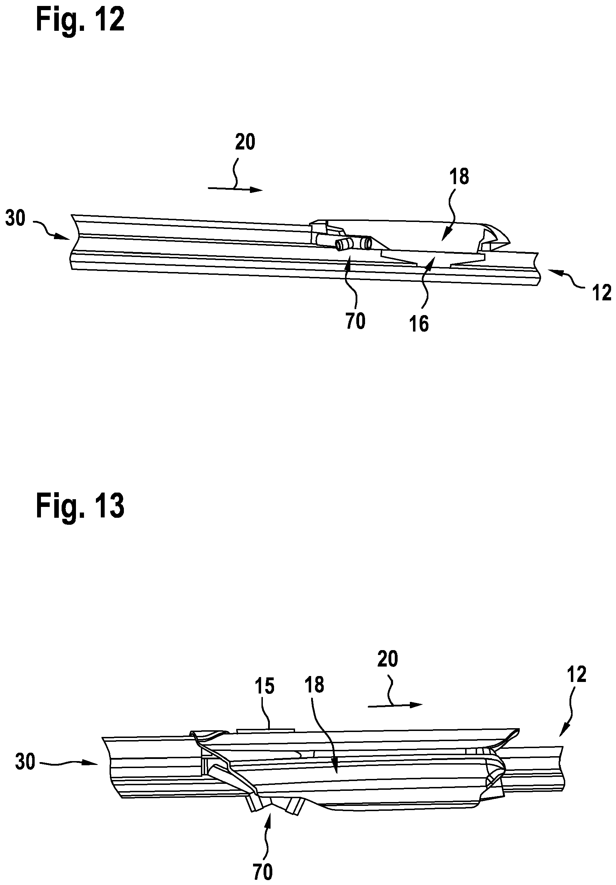

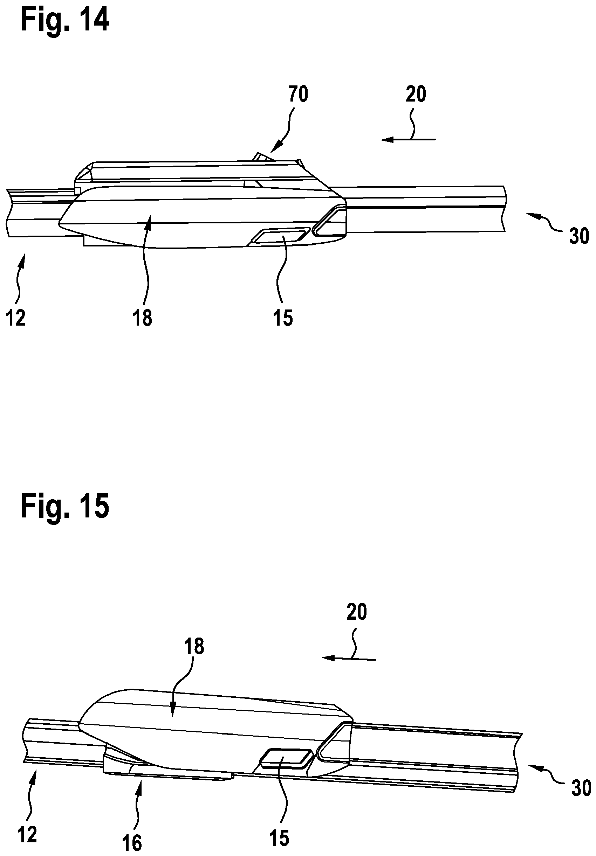

Das Abdeckelement 60 ist im vorliegenden Fall dazu vorgesehen, die Düseneinheit 70 in einem montierten Zustand in einer Abdeckrichtung 22 zumindest zu einem Großteil zu verdecken (vgl. Figuren 12 bis 15). Das Abdeckelement 60 ist dazu vorgesehen, zumindest das dritte Düsenelement 74 abzudecken. Das Abdeckelement 60 ist dazu vorgesehen, das erste Kopplungselement 84 in dem montierten Zustand in der Abdeckrichtung 22 vollständig abzudecken. Ferner ist das Abdeckelement 60 dazu vorgesehen, das dritte Kopplungselement 88 in dem montierten Zustand in der Abdeckrichtung 22 vollständig abzudecken. Die Figuren 12 bis 15 veranschaulichen eine Abdeckung des Abdeckelements 60 aus verschiedenen Betrachtungsrichtungen. Alternativ könnte ein Abdeckelement ein erstes Düsenelement und/oder ein zweites Düsenelement abdecken.

## Patentansprüche

1. Wischervorrichtung, insbesondere Scheibenwischervorrichtung, mit einer Fluidleiteinheit (30), die zumindest ein Befestigungselement (32) aufweist, das zur Befestigung an einem Wischarm (14) vorgesehen ist, und mit zumindest einem Kanalelement (34), das einstückig mit dem Befestigungselement (32) ausgebildet ist **dadurch gekennzeichnet, dass** das Befestigungselement (32) und das Kanalelement (34) zumindest teilweise aus verschiedenen Materialien gebildet sind..

2. Wischervorrichtung nach Anspruch 1 oder 2, **dadurch gekennzeichnet, dass** das Kanalelement (34) weicher ist als das Befestigungselement (32).

3. Wischervorrichtung nach einem der vorhergehenden Ansprüche, **dadurch gekennzeichnet, dass** das Kanalelement (34) wenigstens eine Seitenöffnung (44, 46), welche verschieden zu einer Haupteintrittsöffnung und verschieden zu einer Hauptaustrittsöffnung (42) des Kanalelements (34) ist, aufweist.

4. Wischervorrichtung nach einem der vorhergehenden Ansprüche, **dadurch gekennzeichnet, dass** die Fluidleiteinheit (30) als ein einstückiges Mehrkomponentenbauteil ausgebildet ist.

5. Wischervorrichtung nach einem der vorhergehenden Ansprüche, **dadurch gekennzeichnet, dass** die Fluidleiteinheit (30) über zumindest einen Großteil einer Längserstreckung der Fluidleiteinheit (30) ein gleichbleibendes Profil aufweist.

6. Wischervorrichtung nach einem der vorhergehenden Ansprüche, **dadurch gekennzeichnet, dass** das Befestigungselement (32) zumindest ein U-förmiges Profil aufweist.

7. Wischervorrichtung nach einem der vorhergehenden Ansprüche, **dadurch gekennzeichnet, dass** das Kanalelement (34) in einem montierten Zustand an einer dem Wischarm (14) abgewandten Seite des Befestigungselements (32) angeordnet ist.

8. Wischervorrichtung nach einem der vorhergehenden Ansprüche, **dadurch gekennzeichnet, dass** wenigstens ein dem Befestigungselement (32) zugewandter Wandteil (48) des Kanalelements (34) eine höhere Wandstärke aufweist als wenigstens ein dem Befestigungselement (32) abgewandter weiterer Wandteil (50) des Kanalelements (34).

9. Wischer (10), insbesondere Scheibenwischer, mit einer Wischervorrichtung nach einem der vorhergehenden Ansprüche.

## Claims

1. Wiper device, in particular windscreen wiper device, having a fluid-guiding unit (30) which has at least one fastening element (32) which is provided for fastening to a wiper arm (14), and having at least one channel element (34) which is formed in one piece with the fastening element (32), **characterized in that** the fastening element (32) and the channel element (34) are at least partially formed from different materials.

2. Wiper device according to Claim 1 or 2, **characterized in that** the channel element (34) is softer than the fastening element (32).

3. Wiper device according to either of the preceding claims, **characterized in that** the channel element (34) has at least one side opening (44, 46) which differs from a main inlet opening and main outlet opening (42) of the channel element (34).

4. Wiper device according to one of the preceding claims, **characterized in that** the fluid-guiding unit (30) is formed as a one-piece multi-component part.

5. Wiper device according to one of the preceding claims, **characterized in that** the fluid-guiding unit (30) has a constant profile over at least a large part of a longitudinal extent of the fluid-guiding unit (30).

6. Wiper device according to one of the preceding claims, **characterized in that** the fastening element (32) has at least a U-shaped profile.

7. Wiper device according to one of the preceding claims, **characterized in that,** in a mounted state, the channel element (34) is arranged on a side of the fastening element (32) that faces away from the wiper arm (14).

8. Wiper device according to one of the preceding claims, **characterized in that** at least one wall part (48), facing the fastening element (32), of the channel element (34) has a larger wall thickness than at least one further wall part (50), facing away from the fastening element (32), of the channel element (34).

9. Wiper (10), in particular windscreen wiper, having a wiper device according to one of the preceding claims.

## Revendications

1. Dispositif d'essuyage, en particulier dispositif d'essuie-glace, comprenant une unité d'alimentation en fluide (30) qui présente au moins un élément de fixation (32) qui est prévu pour être fixé à un bras d'essuie-glace (14), comprenant au moins un élément de conduit (34) qui est réalisé d'une seule pièce avec l'élément de fixation (32), **caractérisé en ce que** l'élément de fixation (32) et l'élément de conduit (34) sont formés au moins en partie de différents matériaux.

2. Dispositif d'essuyage selon la revendication 1 ou 2, **caractérisé en ce que** l'élément de conduit (34) est plus souple que l'élément de fixation (32).

3. Dispositif d'essuyage selon l'une quelconque des revendications précédentes, **caractérisé en ce que** l'élément de conduit (34) présente au moins une ouverture latérale (44, 46) qui est différente d'une ouverture d'entrée principale et qui est différente d'une ouverture de sortie principale (42) de l'élément de conduit (34).

4. Dispositif d'essuyage selon l'une quelconque des revendications précédentes, **caractérisé en ce que** l'unité d'alimentation en fluide (30) est réalisée sous forme d'élément à plusieurs composants monobloc.

5. Dispositif d'essuyage selon l'une quelconque des revendications précédentes, **caractérisé en ce que** l'unité d'alimentation en fluide (30) présente un profil uniforme sur au moins une majeure partie d'une étendue longitudinale de l'unité d'alimentation en fluide (30).

6. Dispositif d'essuyage selon l'une quelconque des revendications précédentes, **caractérisé en ce que** l'élément de fixation (32) présente au moins un profil en forme de U.

7. Dispositif d'essuyage selon l'une quelconque des revendications précédentes, **caractérisé en ce que** l'élément de conduit (34) est disposé dans un état monté au niveau d'un côté de l'élément de fixation (32) opposé au bras d'essuie-glace (14).

8. Dispositif d'essuyage selon l'une quelconque des revendications précédentes, **caractérisé en ce qu'**au moins une partie de paroi (48) de l'élément de conduit (34) tournée vers l'élément de fixation (32) présente une plus grande épaisseur de paroi qu'au moins une partie de paroi supplémentaire (50) de l'élément de conduit (34) opposée à l'élément de fixation (32).

9. Organe d'essuyage (10), en particulier essuie-glace, comprenant un dispositif d'essuyage selon l'une quelconque des revendications précédentes.
